# EUROPÄISCHE PATENTSCHRIFT

(11) **EP 2 987 433 B1**
(45) Veröffentlichungstag und Bekanntmachung des Hinweises auf die Patenterteilung: **23.08.2017**
(21) Anmeldenummer: 15170262.8
(22) Anmeldetag: 02.06.2015
(51) Int. Cl.: A47J 31/44

(54) **GETRÄNKEZUBEREITUNGSVORRICHTUNG**
BEVERAGE PREPARATION DEVICE
DISPOSITIF DE PREPARATION DE BOISSONS

(30) Priorität: 18.08.2014 DE 202014103825 U
(43) Veröffentlichungstag der Anmeldung: 24.02.2016
(73) Patentinhaber: Eugster/Frismag AG, 8580 Amriswil (CH)
(72) Erfinder: WÄGER, Simon, 8580 Amriswil (CH); RIESSBECK, Wolfgang, 8597 Landschlacht (CH)
(74) Vertreter: Wagner, Kilian

(56) Entgegenhaltungen:
- EP-A1- 2 294 952
- EP-A1- 2 730 201
- WO-A1-2008/071024

## Beschreibung

Die Erfindung betrifft eine Getränkezubereitungsvorrichtung gemäß dem Oberbegriff des Anspruchs 1, insbesondere eine Kaffeemaschine. Die Getränkezubereitungsvorrichtung umfasst eine Milcherwärmungs- und/oder Milchaufschäumvorrichtung, umfassend eine Milchleitung zum Fördern von zu erwärmender und/oder aufzuschäumender Milch zu Aufschäum- und/oder Erwärmungsmitteln, wobei der Milchleitung ein Quetschventil zugeordnet ist, mit dem die Milchleitung in einem Deformationsabschnitt quetschbar ist.

Getränkezubereitungsvorrichtungen mit Milcherwärmungs- und/oder Milchaufschäummitteln sind hinlänglich bekannt. Gemeinsam ist derartigen Vorrichtungen, dass Milch über eine Milchleitung angesaugt und dann erwärmt und/oder aufgeschäumt wird. Üblicherweise erfolgt das Ansaugen mittels Unterdruck, welcher wiederum mit Hilfe von durch eine Venturidüse strömendem Dampf erzeugt wird. Der Dampf wird der Milch zugeführt und erwärmt diese. Falls in die Milchleitung Luft über eine Luftleitung zugeführt wird, wird die Milch durch Zugabe des Dampfes nicht nur erwärmt sondern gleichzeitig aufgeschäumt.

Bei den bekannten Milcherwärmungs- und/oder Milchaufschäumvorrichtungen wird die Milchtemperatur über die Einstellung des Durchflussvolumenstroms durch die Milchleitung beeinflusst. Für eine automatisierte Einstellung des Durchflussvolumenstromes hat die Anmelderin eine in der EP 2 730 201 A1 beschriebene, robuste Lösung vorgeschlagen, wobei hier das Ventil zur Einstellung des Durchflussvolumenstroms der Milch als Quetschventil ausgebildet ist und in vorteilhafter Weise über eine Schwenkhebelmimik betätigbar ist. Zum Betätigen der Schwenkhebelmimik ist ein Linearantrieb vorgesehen, der mittels der Schwenkhebelmimik zusammenwirkt.

Eine der ersten Lösungen zur Durchflussvolumenstromeinstellung in Milchleitungen von Kaffeemaschinen ist in der EP 0 813 834 B1 beschrieben. Auch hier ist das Ventil zur Einstellung des Volumenstroms als Quetschventil ausgebildet, wobei das Ventil eine manuell verdrehbare Schraube zur Variation des freien Durchflussquerschnittes eines flexiblen Milchschlauches aufweist.

In der EP 2 099 341 B1 und der WO 2008/071024 A1 ist ein Quetschventil für eine Getränkezubereitungsvorrichtung beschrieben, wobei das Ventil einen Exzenterantrieb aufweist, welcher zwingend wechselweise mit zwei Schläuchen zusammenwirkt. Das bekannte Ventil ist nicht zur Einstellung der Milchtemperatur geeignet. Es ist nämlich zwischen ausschließlich drei Schaltstellungen verstellbar, nämlich einer Mittelstellung, in welcher beide Schläuche vollständig geöffnet sind und zwei weiteren Drehstellungen, in denen jeweils einer der Schläuche vollständig geöffnet und der jeweils andere der Schläuche vollständig geschlossen ist.

Ausgehend von dem vorgenannten Stand der Technik liegt der Erfindung die Aufgabe zugrunde, eine Getränkezubereitungsvorrichtung mit einem rotatorisch antreibbaren Quetschventil anzugeben, mit dem die Milchtemperatur von zu erwärmender und/oder aufzuschäumender Milch beeinflussbar bzw. einstellbar ist. Auf den Einsatz eines kostenintensiven Linearantriebs soll verzichtet werden können. Die Getränkezubereitungsvorrichtung und insbesondere die Quetschventilmimik soll zudem bevorzugt robust und sich zudem durch gute bzw. feine Einstellbarkeit der Milchtemperatur auszeichnen.

Diese Aufgabe wird mit den Merkmalen des Anspruchs 1 gelöst, d.h. bei einer gattungsgemäßen Getränkezubereitungsvorrichtung dadurch, dass das Quetschventil ein um eine Rotationsachse verdrehbares Exzenterelement aufweist, wobei zur Beeinflussung der Milchtemperatur das Exzenterelement stufenlos oder in Stufen in eine Mehrzahl, insbesondere mindestens drei, von unterschiedlichen Rotationspositionen verdrehbar ist, in denen der Deformationsabschnitt unterschiedlich stark gequetscht ist und die sich hinsichtlich des resultierenden freien Strömungsquerschnittes des Deformationsabschnittes zur Einstellung unterschiedlicher Milchvolumenströme unterscheiden. Dabei ist vorgesehen, dass dem Exzenterelement zum Verdrehen in die unterschiedlichen Rotationspositionen ein Handgriff zum manuellen Verdrehen des Exzenterelementes in die unterschiedlichen Rotationspositionen zugeordnet ist und/oder ein elektromotorischer Antrieb zum automatisierten Verdrehen in die unterschiedlichen Rotationspositionen. Für den Fall der Realisierung eines elektromotorischen Antriebs ist weiterhin vorgesehen, dass diesem eine Steuereinheit der Getränkezubereitungsvorrichtung zugeordnet ist, über die der Antrieb ansteuerbar ist, wobei in einem Speicher der Steuereinheit die unterschiedlichen Rotationspositionen abgelegt sind und/oder die unterschiedlichen Rotationspositionen über entsprechende Eingabemittel nutzerseitig vorgebbar und/oder aus einer Vorauswahl auswählbar sind.

Vorteilhafte Ausgestaltungen der Erfindung sind in den Unteransprüchen angegeben.

Der Erfindung liegt der Gedanke zugrunde, zur Einstellung der durch die, vorzugsweise einzige, Milchleitung angesaugten Milch ein Quetschventil einzusetzen, welches ein um eine Rotationsachse verdrehbares Exzenterelement aufweist, welches bevorzugt unmittelbar mit einem, insbesondere reversibel deformierbaren, Deformationsabschnitt der Milchleitung zusammenwirkt, um diese zu quetschen. Damit eine Mehrzahl unterschiedlicher Milchtemperaturen einstellbar sind, ist erfindungsgemäß zudem vorgesehen, dass das Exzenterelement nicht nur zwischen zwei Extrempositionen, insbesondere einer vollständig geöffneten und einer weiteren Drehposition, beispielsweise einer vollständig geschlossenen Drehposition bzw. Rotationsposition rotierbar ist sondern stufenlos oder in Stufen in eine Mehrzahl von unterschiedlichen Rotationspositionen verdrehbar ist, die sich dadurch auszeichnen, dass in diesen der Deformationsabschnitt gequetscht, d.h. mittels des Exzenterelementes deformiert ist und zwar unterschiedlich stark, sodass sich die unterschiedlichen Rotationspositionen durch einen resultierenden, unterschiedlich großdimensionierten freien Strömungsquerschnitt voneinander unterscheiden, wobei die unterschiedlichen Strömungsquerschnitte bei unterstellter gleichbleibender Ansaugleistung in unterschiedlichen Milchvolumenströmen resultieren und in der Folge bei unterstellter gleichbleibender Dampfenergiezufuhr in unterschiedlichen Milchtemperaturen. Um diese Einstellbarkeit in die Vielzahl von Rotationspositionen, insbesondere Zwischenrotationspositionen zu ermöglichen, sieht die Erfindung zwei Optionen vor, die alternativ jedoch auch kumulativ realisiert werden können. Gemäß einer ersten Option ist vorgesehen, dass dem Exzenterelement ein Handgriff zum manuellen Verdrehen zugeordnet ist, wobei durch manuelles Verdrehen des Handgriffs und dadurch des Exzenterelementes die unterschiedlichen Quetsch- bzw. Deformationsstärken zur Erzielung unterschiedlicher Milchvolumenströme einstellbar sind. Zusätzlich oder alternativ ist dem Exzenterelement ein elektromotorischer Antrieb, insbesondere ein Rotationsantrieb zum automatisierten Verdrehen des Exzenterelementes zugeordnet, wobei dem elektromotorischen Antrieb eine Steuereinheit zugeordnet ist, über die er ansteuerbar ist. Die Steuereinheit weist wiederum einen Speicher auf, in dem die unterschiedlichen Rotationspositionen, die mittels des Antriebs die Rotationspositionen des Exzenterelementes, die über den Antrieb ansteuerbar sind, abgelegt sind und/oder über die die Rotationsposition nutzerseitig vorgebbar und/oder auswählbar sind. Es wird also eine Getränkezubereitungsvorrichtung vorgeschlagen mit einem ein Exzenterelement aufweisenden Quetschventil zur Erzeugung einer Mehrzahl von unterschiedlichen freien Strömungsquerschnitten eines Deformationsabschnittes zur Erzielung unterschiedlicher Milchdurchflussvolumenströme, um somit Einfluss auf die Temperatur der zu erwärmenden und/oder aufzuschäumenden Milch zu nehmen, wobei das Exzenterelement manuell oder elektromotorisch antreibbar ist, wobei im letztgenannten Fall eine Steuereinheit in einen Speicher vorgegebene unterschiedliche Rotationspositionen aufweist und/oder unterschiedliche Rotationspositionen, insbesondere mittelbar über die Eingabe einer gewünschten Temperatur vorgebbar sind und/oder aus einer Auswahl von Rotationspositionen, bevorzugt über den Rotationspositionen zugeordnete Temperaturen bzw. Temperaturvorgaben auswählbar sind.

Die erfindungsgemäße Getränkezubereitungsvorrichtung ist aufgrund der Realisierung eines rotierbaren Exzenterelementes äußerst robust und gut reinigbar, da der Ventilkörper, hier das Exzenterelement, nicht in der Fluidleitung integriert, d.h. von der Milch umströmt ist. Darüber hinaus kann auf schwer justierbare Schraub-Antriebe zum Quetschen des Deformationsabschnittes verzichtet werden, ebenso wie auf vergleichsweise aufwändige Linearantriebe. Bevorzugt verläuft die Rotationsachse mit Abstand zur Milchleitung, d.h. durchsetzt diese nicht und ist senkrecht zur Milchleitung ausgerichtet.

Besonders bevorzugt ist eine Ausführungsform, bei der mittels des Exzenterelementes die Milchleitung vollständig öffnenbar ist, dass also das Exzenterelement in eine Rotationsposition verstellbar ist, der es im Gegensatz zu den Rotationspositionen, in denen es im Deformationsabschnitt unterschiedlich stark quetscht nicht deformiert oder zumindest nicht so deformiert, dass der Milchvolumenstrom merklich beeinflusst ist.

Besonders bevorzugt ist eine Ausführungsform, bei der das Quetschventil so ausgebildet ist, dass dieses den Deformationsabschnitt in keiner manuell und/oder elektromotorisch einstellbaren Rotationsstellung völlig verschließt. Die Milchleitung wird also in keiner Rotationsposition so stark gequetscht, dass kein freier Strömungsquerschnitt mehr gegeben ist, sodass in jeder Rotationsposition des Exzenterelementes ein Milchfluss möglich ist bzw. resultiert. Eine derartige Ausführungsform hat eine Vielzahl von Vorteilen. So wird das Milchleitungsmaterial im Deformationsabschnitt, der vorzugsweise aus einem Silikonmaterial ausgebildet ist, geschont, da eine maximale Quetschung vermieden wird, wodurch Materialermüdungserscheinungen vermieden werden. Darüber hinaus wird ein reiner Dampfaustritt (ohne Milch) aus den Aufschäum- und/oder Erwärmungsmittel, zumindest nach einer Ansaugphase vermieden. Desweiteren kann eine Fehlbedienung während der Reinigung vermieden werden, da in jedem Fall ein Durchfluss von Reinigungsmedium durch die Milchleitung möglich ist - unabhängig von der konkreten Stellung (Rotationsposition) des Exzenterelementes.

Erfindungsgemäß ist vorgesehen, dass die Milchleitung zum Ansaugen von Milch und zum Transportieren der Milch hin zu den Aufschäum- und/oder Erwärmungsmitteln die einzige Fluidleitung ist, auf die das Exzenterelement quetschend einwirkt.

Besonders bevorzugt ist eine Ausführungsform der Getränkezubereitungsvorrichtung, bei der diese einen abnehmbaren, flexiblen und bevorzugt auch deformierbaren Milchschlauch aufweist, wobei es besonders zweckmäßig ist, wenn der mit dem Exzenterelement zusammenwirkende Deformationsabschnitt nicht von dem flexiblen Milchschlauch gebildet wird, sondern von einem Elastomerelement, insbesondere einem Silikonelement, welches nicht unmittelbar Kontakt hat mit einem Milchbehälter, d.h. nicht in diesem eingetaucht werden kann. Bevorzugt ist benachbart zu dem Deformationsabschnitt, insbesondere mit Abstand zu diesem, ein Anschluss (Schnittstelle) zum lösbaren Festlegen des vorerwähnten flexiblen Milchschlauches vorgesehen. Bei Bedarf kann das Elastomermaterialteil, welches den Deformationsabschnitt bildet, ebenfalls lösbar angeordnet werden, um somit einer manuellen Reinigung unterzogen zu werden.

Konstruktiv hat es sich als vorteilhaft herausgestellt, wenn die Rotationsachse bei bestimmungsgemäßer Positionierung der Getränkezubereitungsvorrichtung vertikal ausgerichtet ist, bevorzugt derart, dass für den Fall des Vorsehens eines Handgriffes, d.h. einer Grifffläche diese von oben her greifbar bzw. betätigbar ist. Alternative Ausrichtungen der Rotationsachse relativ zur Standfläche der Getränkezubereitungsvorrichtung sind ebenfalls realisierbar und sollen im Rahmen vorteilhafter Ausgestaltungen der Erfindung als offenbart gelten. Insbesondere ist auch eine waagerechte Orientierung der Rotationsachse möglich, d.h. parallel zur Standfläche - eine diagonale Anordnung ist ebenfalls realisierbar.

Ebenfalls bevorzugt ist eine Ausführungsform, bei der mittels des Quetschventils nicht die absolut in die Milchleitung eingetragene Luftmenge beeinflussbar ist, sondern lediglich der Milchvolumenstrom, was erreicht werden kann, wenn das Quetschventil in Strömungsrichtung der Milch vor der Luftleitung angeordnet ist und der Strömungsquerschnitt der Luftleitung nicht mittels des Exzenterelementes beeinflussbar ist.

Im Hinblick auf eine einfache Fertigbarkeit und Montierbarkeit der Getränkezubereitungsvorrichtung hat es sich als vorteilhaft erwiesen, wenn der Deformationsabschnitt auf einer dem Exzenterelement gegenüberliegenden Seite an einem Tragstrukturbauteil, d.h. einem starren Bauteil, insbesondere einem Kunststoffspritzgussteil abstützt, an welchem gleichzeitig ein Luftansaugstutzen der Luftleitung vorgesehen ist, um die Luftleitung an ein Ventil der Getränkezubereitungsvorrichtung anschließen zu können. Alternativ zu einer einteiligen Ausbildung des Luftansaugstutzens der Luftleitung mit dem Tragstrukturbauteil ist auch eine mehrteilige Ausbildung möglich, wobei in diesem Falle der Luftansaugstutzen bevorzugt, jedoch nicht zwingend, lösbar an dem Tragstrukturbauteil festgelegt sein soll. Die zuvor beschriebene Bauweise ermöglicht den Einsatz von vergleichsweise dünnwandigen, vorzugsweise lösbar andockbaren Saugschläuchen, da diese nicht im Hinblick auf ihre mechanische Belastbarkeit (Quetschbarkeit) ausgelegt werden müssen.

Besonders zweckmäßig ist es, wenn zum Ansaugen der Milch keine mechanische Pumpe eingesetzt wird sondern wenn der hierzu notwendige Unterdruck mit Hilfe einer Venturidüse erzeugt wird, die von Dampferzeugungsmitteln der Getränkezubereitungsvorrichtung mit Dampf beaufschlagbar ist. Die Venturidüse sitzt bevorzugt in Strömungsrichtung des Dampfes vor einer Unterdruckkammer, in welcher die Milchleitung mündet und in welcher die Milch mit dem Dampf zu deren Erwärmung erhitzbar ist. Wird der Milch zusätzlich über die fakultative Milchleitung Luft zugeführt, wird die Milch in der Unterdruckkammer geschäumt.

Im Hinblick auf die Ausführungsform mit elektromotorischem Antrieb ist es bevorzugt, wenn die dem elektromotorischen Antrieb zugeordnete Steuereinheit signalleitend mit einer Visualisierungseinheit, insbesondere einem Bildschirm verbunden ist, mittels welcher dem Benutzer unterschiedliche Temperaturen und/oder unterschiedliche Getränkearten zur Auswahl anzeigbar sind, zwischen denen der Benutzer über geeignete Eingabemittel, insbesondere über eine Touchscreenlösung oder alternativ über Drück- oder Drehknöpfe auswählen kann, wobei den unterschiedlichen Temperaturen bzw. Getränken die unterschiedlichen Rotationspositionen zugeordnet und von der Steuereinheit durch entsprechende Ansteuerung des Antriebs ansteuerbar sind. Die Rotationsposition wird also von dem Benutzer bevorzugt mittelbar ausgewählt durch Auswahl einer Solltemperatur oder eines Solltemperaturbereichs oder durch die Wahl eines entsprechenden Getränks. Zusätzlich oder alternativ ist es möglich, dass von dem Benutzer einer Rotationsposition, beispielsweise durch manuelle Vorgabe einer gewünschten Getränketemperatur, zu der dann steuereinheitsseitig eine zugehörige Rotationsposition zugeordnet ist, ausgewählt werden kann.

Ganz besonders bevorzugt ist eine Ausführungsform, bei der das Quetschventil zumindest abschnittsweise (teilweise) oder vollständig von der Getränkezubereitungsvorrichtung entnehmbar angeordnet ist. Anders ausgedrückt sind zumindest Teile des Quetschventils, insbesondere das Exzenterelement mit oder alternativ ausschließlich ohne Deformationsabschnitt lösbar an der Getränkezubereitungsvorrichtung fixiert bzw. angeordnet, insbesondere um eine gute Reinigbarkeit der Komponenten sicherzustellen.

Weitere Vorteile, Merkmale und Einzelheiten der Erfindung ergeben sich aus den der nachfolgenden Beschreibung bevorzugten Ausführungsbeispielen sowie anhand der Zeichnungen.

Diese zeigen in:
- Fig. 1: eine als Kaffeemaschine ausgebildete Getränkezubereitungsvorrichtung mit einer Milcherwärmungs- und/oder Milchaufschäumvorrichtung,
- Fig. 2: ein Quetschventil der Vorrichtung in einer maximal geöffneten Position, und
- Fig. 3: das Quetschventil gemäß Fig. 2 in einer maximal geschlossenen Position, in der bevorzugt noch ein freier Strömungsquerschnitt zum Durchströmen von Milch verbleibt.

In den Figuren sind gleiche Elemente und Elemente mit der gleichen Funktion mit den gleichen Bezugszeichen gekennzeichnet.

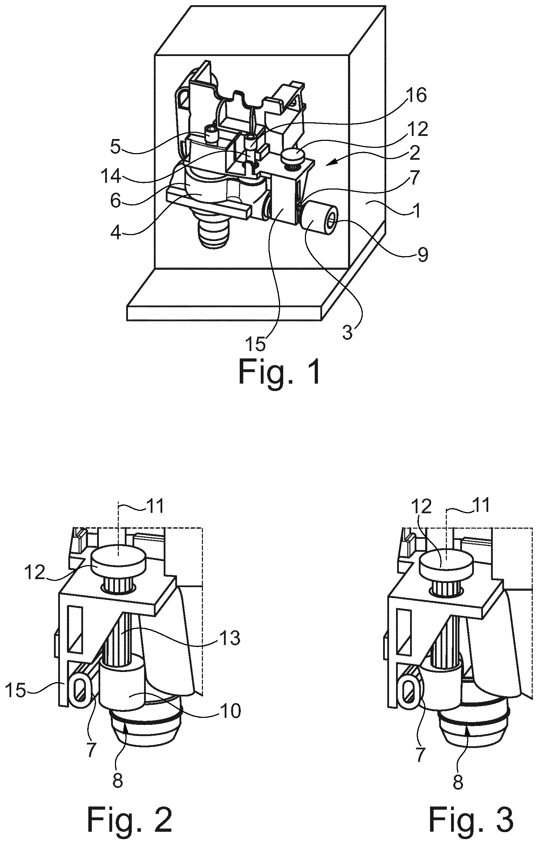

In Fig. 1 ist eine beispielsweise als Kaffeevollautomat oder Portions-, insbesondere Kapselmaschine ausgebildete Getränkezubereitungsvorrichtung 1 gezeigt. Diese umfasst eine aus Übersichtlichkeitsgründen nicht gezeigte, an sich bekannte Brüheinheit zum Auslaugen eines Getränkesubstrates, insbesondere von Kaffeemehl oder zum Auflösen eines Getränkesubstrates. Ferner umfasst die Getränkezubereitungsvorrichtung eine Milcherwärmungs- und/oder Milchaufschäumvorrichtung (Einrichtung) mittels der Milch erwärmbar und in dem gezeigten Ausführungsbeispiel auch aufschäumbar ist.

Die Milcherwärmungs- und/oder Milchaufschäumvorrichtung 2 der Getränkezubereitungsvorrichtung 1 umfasst eine Milchleitung 3, über die Milch ansaugbar und zu Aufschäum- und/oder Erwärmungsmitteln 4 der Vorrichtung transportierbar ist, wobei das Erwärmen und Aufschäumen mittels Dampf erfolgt, der von nicht gezeigten Dampferzeugungsmitteln der Getränkezubereitungsvorrichtung 1 erzeugbar und über einen Dampfanschluss 5 über eine nicht gezeigte Venturidüse in eine Unterdruckkammer 6 der Aufschäum- und/oder Erwärmungsmittel 4 förderbar ist, in welcher er der Milch zugeleitet wird und diese aufschäumt und bei Luftbeimischung auch aufschäumt.

Die Milchleitung 3 umfasst einen reversibel deformierbaren Deformationsabschnitt 7 der Bestandteil eines Quetschventils 8 zum Quetschen des Deformationsabschnittes 7 und in der Folge zur Veränderung des freien Durchflussquerschnittes zur Einstellung des angesaugten Milchvolumenstroms und in der Folge zur Einstellung der Milchtemperatur. Bei kleiner werdendem Milchvolumenstrom steigt dabei die Milchtemperatur bei unverändertem Dampfvolumenstrom.

Die Milchleitung 3 weist benachbart zu dem Deformationsabschnitt 7 einen Anschluss 9 zum lösbaren Anschließen eines nicht gezeigten, flexiblen Milchschlauches auf.

Wie insbesondere aus den Fig. 2 und 3 zu erkennen ist, umfasst das Quetschventil 8 ein Exzenterelement 10, welches um eine benachbart und mit Abstand sowie senkrecht zu der Milchleitung 3 angeordnete Rotationsachse 11 rotierbar ist, die das Exzenterelement 10 außermittig durchsetzt. Das Exzenterelement 10 wirkt je nach Rotationsstellung um die Rotationsachse 11 unterschiedlich stark deformierend auf den Deformationsabschnitt 7, sodass in unterschiedlichen Rotationspositionen unterschiedliche freie Strömungsquerschnitte für die Milch resultieren. Die unterschiedlichen Rotationspositionen können, wie in dem Ausführungsbeispiel stufenlos eingestellt werden oder alternativ beispielsweise über Raststellungen gestuft. Das Einstellen der Rotationspositionen kann, wie bei dem konkreten Ausführungsbeispiel manuell über einen Handgriff 12 erfolgen. Zusätzlich oder alternativ kann dem Exzenterelement 10 ein rotatorischer, elektromotorischer Antrieb, insbesondere ein Schrittmotor zum Rotieren des Exzenterelementes 10 zugeordnet sein. In dem konkreten Ausführungsbeispiel ist das Exzenterelement 10 über eine mittels des Handgriffs 12 manuell verdrehbare Welle 13 mit dem Handgriff 12 verbunden, der den oberen Abschluss der Welle 13 bildet, wobei die Welle 13 im montierten Zustand vertikal ausgerichtet ist.

Der Deformationsabschnitt 7 stützt sich auf der dem Exzenterelement abgewandten Seite an einem als Kunststoffspritzgussteil ausgebildeten starren Tragstrukturbauteil 15 ab, an welchem, wie in Fig. 1 gezeigt ist auch ein Luftansaugstutzen 16 ausgebildet ist, der zum Andocken eines Luftschlauches (nicht gezeigt) dient, um eine Luftleitung 14, die in die Milchleitung 3 stromaufwärts des Quetschventils 8 mündet, mit Luft zur Erzeugung von Milchschaum zu versorgen.

Das Quetschventil 8 kann zwischen der in Fig. 2 gezeigten, maximal geöffneten Position und der in Fig. 3 gezeigten, maximal geschlossenen Position durch Rotieren des Exzenterelementes 10 um die Rotationsachse 11 verstellt werden, wobei in der in Fig. 3 geschlossenen Position ein Restspalt in der Milchleitung 3 verbleibt, sodass auch in der geschlossenen Position ein Durchfluss gewährleistet ist. Ganz generell kann grundsätzlich auch eine Ausführungsform realisiert werden, bei der dann in der geschlossenen Position kein freier Strömungsquerschnitt mehr im Deformationsabschnitt vorgesehen ist.

Neben den gezeigten zwei Positionen sind weitere Rotationspositionen des Exzenterelementes um die Rotationsachse 11 relativ zu dem Deformationsabschnitt 7 einstellbar, die sich hinsichtlich des resultierenden Quetschgrades und somit hinsichtlich des freien Strömungsquerschnittes unterscheiden, sodass in den unterschiedlichen Rotationspositionen unterschiedliche Milchvolumenströme und damit unterschiedliche Milchtemperaturen resultieren.

Bei einer nicht gezeigten Variante ist das Exzenterelement 10 über einen elektromotorischen Antrieb rotierbar, beispielsweise um die gezeigte Rotationsachse 11. Hierzu kann der Handgriff 12 beispielsweise als Zahnrad ausgebildet sein, der mit einem weiteren, mittels des Antriebs rotierbaren Zahnrad kämmt. Alternativ kann die Welle 13 unmittelbar die Motorwelle sein oder eine Verlängerung der Motorwelle. Bevorzugt handelt es sich bei dem eingesetzten Motor um einen Schrittmotor, um gezielt die unterschiedlichen Rotationspositionen anfahren zu können. Jedenfalls ist dem Antrieb (Elektromotor) eine Steuereinheit zugeordnet, die den Antrieb zum Anfahren entsprechender Rotationspositionen des Exzenterelementes in Abhängigkeit einer Benutzervorgabe und/oder anhand eines Programmablaufs ansteuert, wobei in jedem Fall unterschiedliche Rotationspositionen anfahrbar sind, die sich hinsichtlich des Quetschgrades des Deformationsabschnittes 7 zur Einstellung unterschiedlicher Milchtemperaturen unterscheiden.

### Bezugszeichenliste

- 1: Getränkezubereitungsvorrichtung
- 2: Milcherwärmungs- und/oder Milchaufschäumvorrichtung
- 3: Milchleitung
- 4: Aufschäum- und/oder Erwärmungsmittel
- 5: Dampfanschluss
- 6: Unterdruckkammer
- 7: Deformationsabschnitt
- 8: Quetschventil
- 9: Anschluss
- 10: Exzenterelement
- 11: Rotationsachse
- 12: Handgriff
- 13: Welle
- 14: Luftleitung
- 15: Tragstrukturbauteil
- 16: Luftansaugstutzen

## Patentansprüche

1. Getränkezubereitungsvorrichtung (1), insbesondere Kaffeemaschine, mit einer Brüheinheit zum Auslaugen oder Auflösen eines Getränkesubstrates sowie mit einer Milcherwärmungs- und/oder Milchaufschäumvorrichtung (2), umfassend eine Milchleitung (3) zum Fördern von zu erwärmender und/oder aufzuschäumender Milch zu Aufschäum- und/oder Erwärmungsmitteln (4), wobei der Milchleitung (3) ein Quetschventil (8) zur Einstellung der Milchtemperatur zugeordnet ist, mit dem die Milchleitung (3) in einem Deformationsabschnitt (7) quetschbar ist,
**dadurch gekennzeichnet,**
**dass** mittels des, ein um eine Rotationsachse (11) verdrehbares Exzenterelement (10) aufweisenden, Quetschventils (8) die Milchtemperatur beeinflussbar ist, in dem das Exzenterelement (10) stufenlos oder in Stufen in eine Mehrzahl von unterschiedlichen Rotationspositionen verdrehbar ist, in denen der Deformationsabschnitt (7) unterschiedlich stark gequetscht ist und die sich hinsichtlich des resultierenden freien Strömungsquerschnittes des Deformationsabschnittes (7) zur Einstellung unterschiedlicher Milchvolumenströme unterscheiden, und dass dem Exzenterelement (10) zum Verdrehen in die unterschiedlichen Rotationspositionen ein Handgriff (12) zum manuellen Verdrehen, und/oder ein elektromotorischer Antrieb zum automatisierten Verdrehen zugeordnet ist, der über eine Steuereinheit ansteuerbar ist, in deren Speicher die unterschiedlichen Rotationspositionen abgelegt sind und/oder über die die Rotationspositionen nutzerseitig vorgebbar und/oder auswählbar sind, und dass die Milchleitung (3) die einzige Fluidleitung ist, mit der das Exzenterelement (10) zusammenwirkend angeordnet ist.

2. Getränkezubereitungsvorrichtung nach Anspruch 1,
**dadurch gekennzeichnet,**
**dass** das Exzenterelement (10) zusätzlich zu den Rotationspositionen, in denen der Deformationsabschnitt (7) unterschiedlich stark gequetscht ist in eine Rotationsposition verstellbar ist, in der der Deformationsabschnitt (7) nicht oder nur minimal gequetscht ist, sodass ein maximaler Milchvolumenstrom resultiert.

3. Getränkezubereitungsvorrichtung nach einem der vorhergehenden Ansprüche,
**dadurch gekennzeichnet,**
**dass** das Exzenterelement (10) und/oder der Deformationsabschnitt (7) derart ausgebildet und angeordnet sind/ist, dass der Deformationsabschnitt (7) in keiner oder alternativ mindestens einer manuell und/oder mittels des Antriebs einstellbaren Rotationsposition keinen freien Strömungsquerschnitt mehr aufweist.

4. Getränkezubereitungsvorrichtung nach einem der vorhergehenden Ansprüche,
**dadurch gekennzeichnet,**
**dass** benachbart, bevorzugt beabstandet, von dem Deformationsabschnitt (7) der Milchleitung (3) ein Anschluss (9) zum lösbaren Festlegen eines flexiblen Milchschlauches vorgesehen ist.

5. Getränkezubereitungsvorrichtung nach einem der vorhergehenden Ansprüche,
**dadurch gekennzeichnet,**
**dass** die Rotationsachse senkrecht zu einer Standfläche der Getränkezubereitungsvorrichtung (1) orientiert ist, insbesondere derart, dass der Handgriff (12) von oben her betätigbar ist.

6. Getränkezubereitungsvorrichtung nach einem der vorhergehenden Ansprüche,
**dadurch gekennzeichnet,**
**dass** in die Milchleitung (3) in Strömungsrichtung der Milch nach dem Quetschventil (8) eine Luftleitung (14) zum Eintragen von Luft in die Milch mündet.

7. Getränkezubereitungsvorrichtung nach Anspruch 6,
**dadurch gekennzeichnet,**
**dass** sich der Deformationsabschnitt (7) auf einer dem Exzenterelement (10) gegenüberliegenden Seite an einem Tragstrukturbauteil (15), insbesondere einem Kunststoffspritzgussteil, abstützt, an welchem ein Luftansaugstutzen (16) der Luftleitung (14), insbesondere einteilig mit diesem, zum Anschließen einer Luftverbindungsleitung zu einem Ventil ausgebildet oder, insbesondere lösbar, angeordnet ist.

8. Getränkezubereitungsvorrichtung nach einem der vorhergehenden Ansprüche,
**dadurch gekennzeichnet,**
**dass** die Getränkezubereitungsvorrichtung (1) Dampferzeugungsmittel aufweist, die dampfleitend mit den Aufschäum- und/oder Erwärmungsmitteln (4), insbesondere über eine Venturidüse mit einer Unterdruckkammer (6) der Aufschäum- und/oder Erwärmungsmittel (4) verbunden sind.

9. Getränkezubereitungsvorrichtung nach einem der vorhergehenden Ansprüche,
**dadurch gekennzeichnet,**
**dass** die Steuereinheit signalleitend mit einer Visualisierungseinheit verbunden ist, mittels der dem Benutzer unterschiedliche Temperaturen und/oder unterschiedliche Getränkearten zur Auswahl anzeigbar sind, zwischen denen der Benutzer über geeignete Eingabemittel auswählen kann, wobei den unterschiedlichen Temperaturen bzw. Getränken die unterschiedlichen Rotationspositionen zugeordnet und von der Steuereinheit durch entsprechende Ansteuerung des Antriebs ansteuerbar sind.

10. Getränkezubereitungsvorrichtung nach einem der vorhergehenden Ansprüche,
**dadurch gekennzeichnet,**
**dass** das Exzenterelement (10) mit oder alternativ ausschließlich ohne Deformationsabschnitt (7) von der Getränkezubereitungsvorrichtung (1) entnehmbar angeordnet ist.

## Claims

1. Beverage preparation device (1), in particular coffee machine having a brewing unit for leaching or dissolving a beverage substrate as well as having a milk heating device and/or milk frothing device (2), including a milk line (3) for conveying milk to be heated and/or frothed to frothing and/or heating means (4), a squeeze valve (8) for setting the temperature of the milk being assigned to the milk line (3) with which valve the milk line (3) is squeezable in a deforming portion (7),
**characterized in that**
the milk temperature can be influenced using the squeeze valve (8) comprising an eccentric element (10) rotatable around a rotational axis (11), in which valve the eccentric element (10) can be rotated infinitely or gradually into a plurality of different rotational positions, in which the deforming portion (7) is squeezed at different intensities and which differ regarding the resulting free flowable cross-section of the deforming portion (7) for setting different milk volume flows, and **in that**, for rotating to the different rotational positions, a handle (12) for manually rotating and/or an electro-motive drive for automatically rotating is assigned to the eccentric element (10), which is controllable via a control unit in the storage of which the different rotational positions are stored and/or via which the rotational positions can be predetermined and/or selected by a user, and **in that** the milk line (3) is the only fluid line with which the eccentric element (10) is cooperatively arranged.

2. Beverage preparation device according to claim 1,
**characterized in that**
the eccentric element (10), in addition to the rotational positions in which the deforming portion (7) is squeezed at different intensities, is adjustable to a rotational position in which the deforming portion (7) is not or only minimally squeezed so that a maximum milk volume flow results.

3. Beverage preparation device according to one of the preceding claims, **characterized in that**
the eccentric element (10) and/or the deforming portion (7) is/are configured and arranged in such a way that the deforming portion (7) no longer comprises a free flow cross-section in no or alternatively at least in one rotational position which can be set manually and/or using the drive.

4. Beverage preparation device according to one of the preceding claims, **characterized in that**
a port (9) for releasably securing a flexible milk hose is provided neighboring, in particular spaced apart from, the deforming portion (7) of the milk line (3).

5. Beverage preparation device according to one of the preceding claims, **characterized in that**
the rotational axis is oriented perpendicular to a base area of the beverage preparation device (1), in particular in such a way that the handle (12) is operable from the top.

6. Beverage preparation device according to one of the preceding claims, **characterized in that**
an air line (14) for introducing air into the milk leads into the milk line (3) in the flow direction of the milk downstream the squeeze valve (8).

7. Beverage preparation device according to claim 6,
**characterized in that**
the deforming portion (7) is supported on a support structure component (15) on a side opposite the eccentric element (10), in particular on a plastic injection-molded part, on which an air intake port (16) of the air line (14), in particular integrally therewith, is formed as a valve or, in particular releasably, is arranged for connecting an air connection line.

8. Beverage preparation device according to one of the preceding claims, **characterized in that**
the beverage preparation device (1) comprises vapor generating means which are, in a vapor-bearing manner, connected to the frothing and/or heating means (4), in particular via a Venturi nozzle to a vacuum chamber (6) of the frothing and/or heating means (4).

9. Beverage preparation device according to one of the preceding claims, **characterized in that**
the control unit is connected to a visualizing unit in a signal-bearing manner, by means of which different temperatures and/or different beverage types for selection can be displayed to the user, which can be selected by the user via suitable input means, wherein the different rotational positions are assigned to the different temperatures or beverages and are controllable by the control unit via corresponding control of the drive.

10. Beverage preparation device according to one of the preceding claims, **characterized in that**
the eccentric element (10) is arranged removable from the beverage preparation device (1) with or alternatively exclusively without deforming portion (7).

## Revendications

1. Dispositif de préparation de boissons (1), en particulier machine à café, comprenant une unité d'infusion pour la percolation ou la dissolution d'un substrat de boisson et comprenant également un dispositif de chauffage de lait et/ou de moussage de lait (2), comprenant une conduite de lait (3) pour transporter du lait à chauffer et/ou à faire mousser vers des moyens de moussage et/ou de chauffage (4), une soupape à écrasement (8) pour ajuster la température du lait étant associée à la conduite de lait (3), avec laquelle la conduite de lait (3) peut être écrasée dans une portion déformable (7),
**caractérisé en ce que**
la température du lait peut être influencée au moyen de la soupape d'écrasement (8) présentant un élément excentrique (10) pouvant tourner autour d'un axe de rotation (11), par le fait que l'élément excentrique (10) peut tourner en continu ou par échelons dans une pluralité de positions de rotation différentes, dans lesquelles la portion déformable (7) est écrasée avec une force variable et qui sont différentes en termes de la section transversale d'écoulement libre résultante de la portion déformable (7) pour l'ajustement de débits volumiques de lait différents, et **en ce qu'**une poignée (12) pour la rotation manuelle, et/ou un entraînement à moteur électrique pour la rotation automatisée, est/sont associé(e)(s) à l'élément excentrique (10) pour la rotation dans les différentes positions de rotation, laquelle ou lequel peut être commandé(e) par une unité de commande, dans la mémoire de laquelle sont consignées les différentes positions de rotation et/ou par le biais de laquelle les positions de rotation peuvent être prédéfinies et/ou sélectionnées par l'utilisateur, et **en ce que** la conduite de lait (3) est la seule conduite fluidique avec laquelle l'élément excentrique (10) est disposé de manière coopérante.

2. Dispositif de préparation de boissons selon la revendication 1,
**caractérisé en ce que**
l'élément excentrique (10), en plus des positions de rotation dans lesquelles la portion déformable (7) est écrasée avec une force différente, peut être réglé dans une position de rotation dans laquelle la portion déformable (7) n'est pas écrasée ou n'est écrasée que de manière minimale, de telle sorte que l'on obtienne un débit volumique de lait maximal.

3. Dispositif de préparation de boissons selon l'une quelconque des revendications précédentes, **caractérisé en ce que**
l'élément excentrique (10) et/ou la portion déformable (7) est/sont réalisé(e)(s) et disposé(e)(s) de telle sorte que la portion de déformation déformable (7) ne présente plus de section transversale d'écoulement libre dans aucune position ou en variante au moins dans une seule position de rotation pouvant être ajustée manuellement et/ou au moyen de l'entraînement.

4. Dispositif de préparation de boissons selon l'une quelconque des revendications précédentes, **caractérisé en ce qu'**à côté de la portion déformable (7) de la conduite de lait (3), de préférence à distance de celle-ci, est prévu un raccord (9) pour la fixation détachable d'un tuyau de lait flexible.

5. Dispositif de préparation de boissons selon l'une quelconque des revendications précédentes, **caractérisé en ce que** l'axe de rotation est orienté perpendiculairement à la surface de support du dispositif de préparation de boissons (1), en particulier de telle sorte que la poignée (12) puisse être actionnée depuis le haut.

6. Dispositif de préparation de boissons selon l'une quelconque des revendications précédentes, **caractérisé en ce que** dans la conduite de lait (3), dans la direction d'écoulement du lait, après la soupape d'écrasement (8), débouche une conduite d'air (14) pour l'introduction d'air dans le lait.

7. Dispositif de préparation de boissons selon la revendication 6,
**caractérisé en ce que** la portion déformable (7) s'appuie, sur un côté opposé à l'élément excentrique (10), contre un composant d'une structure de support (15), en particulier une pièce moulée par injection de plastique, au niveau de laquelle est réalisée ou disposée, en particulier de manière détachable, une tubulure d'aspiration d'air (16) de la conduite d'air (14), en particulier d'une seule pièce avec celle-ci, pour le raccordement d'une conduite de liaison d'air.

8. Dispositif de préparation de boissons selon l'une quelconque des revendications précédentes, **caractérisé en ce que**
le dispositif de préparation de boissons (1) présente des moyens générateurs de vapeur, qui sont connectés de manière à conduire la vapeur aux moyens de moussage et/ou de chauffage (4), en particulier par le biais d'une buse à venturi avec une chambre à dépression (6) des moyens de moussage et/ou de chauffage (4).

9. Dispositif de préparation de boissons selon l'une quelconque des revendications précédentes, **caractérisé en ce que**
l'unité de commande est connectée avec transmission des signaux à une unité de visualisation au moyen de laquelle différentes températures et/ou différents types de boissons peuvent être indiqués pour la sélection par l'utilisateur, entre lesquels l'utilisateur peut choisir par le biais de moyens de saisie appropriés, les différentes positions de rotation étant associées aux différentes températures ou boissons et pouvant être commandées par l'unité de commande par une commande correspondante de l'entraînement.

10. Dispositif de préparation de boissons selon l'une quelconque des revendications précédentes, **caractérisé en ce que**
l'élément excentrique (10) est disposé avec une, ou en variante exclusivement sans, portion déformable (7) de manière à pouvoir être enlevé du dispositif de préparation de boissons (1).
